# EUROPÄISCHE PATENTSCHRIFT

(11) **EP 4 072 002 B1**
(45) Veröffentlichungstag und Bekanntmachung des Hinweises auf die Patenterteilung: **07.05.2025**
(21) Anmeldenummer: 22164919.7
(22) Anmeldetag: 29.03.2022
(51) Int. Cl.: H02P 6/185, H02P 21/24

(54) **SENSORLOSE BESTIMMUNG DER ROTORPOSITION BEI EINEM PERMANENTMAGNET-SYNCHRONMOTOR**
SENSORLESS ROTOR POSITION DETERMINATION IN A PERMANENT MAGNET SYNCHRONOUS MOTOR
DÉTERMINATION SANS CAPTEUR DE LA POSITION DU ROTOR D'UN MOTEUR SYNCHRONE À AIMANTS PERMANENTS

(30) Priorität: 07.04.2021 DE 102021203450
(43) Veröffentlichungstag der Anmeldung: 12.10.2022
(73) Patentinhaber: thyssenkrupp Presta AG, 9492 Eschen (LI); thyssenkrupp AG, 45143 Essen (DE)
(72) Erfinder: Gyökeres, Jeno, 1096 Budapest (HU); Handler, Arpad, 1221 Budapest (HU)
(74) Vertreter: thyssenkrupp Intellectual Property GmbH

(56) Entgegenhaltungen:
- WO-A1-2020/161496
- HUA Y ET AL: "Improved sensorless control of a permanent magnet machine using fundamental pulse width modulation excitation", IET ELECTRIC POWER APPLICATIONS,, vol. 5, no. 4, 1 April 2011 (2011-04-01), pages 359 - 370, XP006038071, ISSN: 1751-8679, DOI: 10.1049/IET-EPA:20100108
- RAVIKUMAR SETTY A ET AL: "Comparison of high frequency signal injection techniques for rotor position estimation at low speed to standstill of PMSM", POWER ELECTRONICS (IICPE), 2012 IEEE 5TH INDIA INTERNATIONAL CONFERENCE ON, IEEE, 6 December 2012 (2012-12-06), pages 1 - 6, XP032326163, ISBN: 978-1-4673-0931-8, DOI: 10.1109/IICPE.2012.6450521

## Beschreibung

Die Erfindung betrifft ein Verfahren zur Bestimmung einer Rotorposition eines dreiphasigen Permanentmagnet-Synchronmotors, wobei der Permanentmagnet-Synchronmotor bezogen auf ein eine d-Achse und eine q-Achse aufweisendes d/q-Koordinatensystem als rotorfestes Bezugssystem eine d-Achsen-Induktivität (Ld) und eine von der d-Achsen-Induktivität (Ld) abweichende q-Achsen-Induktivität (Lq) aufweist, wobei jeder Phase des Permanentmagnet-Synchronmotors jeweils eine Induktivität zugeordnet ist, die sich in Abhängigkeit von der Rotorposition ändert, und wobei die Rotorposition mittels der sich ändernden Induktivitäten bestimmt wird. Weiter betrifft die Erfindung ein Verfahren zur feldorientierten Regelung eines Permanentmagnet-Synchronmotors, insbesondere eines in einem Kraftfahrzeug für ein Assistenzsystem eingesetzten Permanentmagnet-Synchronmotors, wobei eine für die feldorientierte Regelung notwendige Rotorposition des Permanentmagnet-Synchronmotors mittels eines vorstehenden Verfahrens zur Bestimmung einer Rotorposition bestimmt wird.

Die Erfindung betrifft ferner eine Steuereinheit für den Betrieb eines Permanentmagnet-Synchronmotors, sowie ein Lenksystem mit einer solchen Steuereinheit.

Ein Permanentmagnet-Synchronmotor stellt im Prinzip eine Kombination aus einem Induktionsmotor und einem bürstenlosen Gleichstrommotor dar. Wie auch ein bürstenloser Gleichstrommotor umfasst der Permanentmagnet-Synchronmotor einen Permanentmagnetrotor sowie Spulen auf dem Stator. Der Aufbau des Stators mit Spulen bewirkt allerdings eine sinusförmige Wellenform der gegenelektromotorischen Kraft, auch Gegen-EMK (EMK: elektromotorische Kraft) oder BEMF (BEMF: back electromotive force) genannt, sodass der Permanentmagnet-Synchronmotor diesbezüglich eine größere Ähnlichkeit mit einem Induktionsmotor aufweist. Die verschiedenen Wicklungsstränge der Spulen werden, wie bei elektrischen Maschinen üblich, insbesondere mit U, V und W bezeichnet.

Permanentmagnet-Synchronmotoren werden häufig in Kraftfahrzeugen eingesetzt, insbesondere als Servomotoren. Insbesondere ist der Einsatz solcher Motoren in elektromechanischen Hilfskraftlenkungen bekannt, aber auch bei anderen Fahrzeugassistenzsystemen, die einen Elektromotor umfassen. Beispielsweise können solche Permanentmagnet-Synchronmotoren auch zum Antrieb eines Klimakompressors eingesetzt werden. Da das Bordstromnetz eines Kraftfahrzeugs eine Gleichspannung bereitstellt, werden üblicherweise Verfahren zur Steuerung von Permanentmagnet-Synchronmotoren auf Basis der PWM (PWM: Pulsweitenmodulation) eingesetzt, wodurch es ermöglicht wird, ein Mehrphasendrehstromsystem auf elektronischem Weg nachzubilden.

Für die Ansteuerung eines Permanentmagnet-Synchronmotors, insbesondere für eine feldorientierte Regelung, auch kurz FOC (FOC: field-oriented control) genannt, ist es von wichtiger Bedeutung, neben der Drehzahl auch die Position des Rotors des Synchronmotors zu berücksichtigen. Die Rotorposition muss dafür bestimmt werden. Dabei ist es bekannt, Rotorpositionssensoreinheiten einzusetzen, die insbesondere Hall-Sensoren und Winkelsensoren umfassen können. Für sicherheitsrelevante Anwendungen, wie sie insbesondere im Automobilbereich vorkommen, beispielsweise bei einer elektromechanischen Hilfskraftlenkung, wie in der DE 10 2019 202 142 A1 offenbart, ist dabei eine sichere Ansteuerung des Synchronmotors in jedem Fall zu gewährleisten. Aus diesem Grund wird bei solchen Anwendungen regelmäßig ein dritter Rotorpositionssensor vorgesehen, wodurch die Komplexität und die Kosten steigen.

Zur Bestimmung der Rotorposition ist zudem ein Gegen-EMK basiertes Verfahren, auch BEMF basiertes Verfahren genannt, bekannt. Dabei wird ein hochfrequentes Signal auf die Grundspannung aufgebracht und der hervorgerufene Strom bestimmt und daraus die Rotorposition abgeleitet. Nachteilig hierbei ist, dass durch das hochfrequente Signal das Grundspannungssignal beeinträchtigt wird. Nachteilig ist weiter das Erfordernis, den durch das aufgebrachte Signal hervorgerufenen Stromverlauf messtechnisch zu erfassen. Zudem ist das Verfahren im Wesentlichen erst bei einem Erreichen einer vorbestimmten Drehzahl anwendbar.

Weiter ist bekannt, die Rotorposition eines Synchronmotors durch Bestimmung der Sternpunktspannung abzuleiten. Dabei wird ausgenutzt, dass die Sternpunktspannung von der Induktivität der jeweiligen Phase abhängt, die wiederum von der Rotorposition abhängt. Als Erregerspannung wird hierbei das genutzte PWM-Signal verwendet. Voraussetzung dabei ist, dass die Induktivitäten in d- und q-Achse im d/q-Koordinatensystem unterschiedlich sind. Zudem muss der Sternpunkt des Motors mit der zugeordneten Steuereinheit verbunden werden. Um die Sternpunktspannung bei unterschiedlichen Raumzeigern bestimmen zu können, muss darüber hinaus eine spezielle Gleichspannungs-Bus-kompatible Pulsweitenmodulation eingesetzt werden.

In HUA Y ET AL: "Improved sensorless control of a permanent magnet machine using fundamental pulse width modulation excitation", IET ELECTRIC POWER APPLICATIONS, Bd. 5, Nr. 4, 1. April 2011 wird ferner ein Verfahren zur Schätzung der Rotorposition von Permanentmagnet-Synchronmotoren beschrieben. Bei dem Verfahren wird die Ableitung des Motorstroms als Reaktion auf die Standard-Pulsweitenmodulationssequenz (PWM) gemessen, um die Rotorposition zu schätzen. Zusätzliche Sensoren sind hierfür nicht vorgesehen.

RAVIKUMAR SETTY A ET AL: "Comparison of high frequency signal injection techniques for rotor position estimation at low speed to standstill of PMSM", POWER ELECTRONICS (IICPE), 2012 IEEE 5TH INDIA INTERNATIONAL CONFERENCE ON, IEEE, 6. Dezember 2012, gibt darüber hinaus einen Überblick über verschiedene Ansätze zur Bestimmung der Rotorposition unter Verwendung von HFSI-Techniken (HFSI: high frequency signal injection). Die gemeinsame Idee der beschriebenen Ansätze ist das Anlegen eines Prüfspannungssignals an den Permanentmagnet-Synchronmotor zur Erregung der Wicklungsinduktivitäten. Die Stromantwort wird dann verwendet, um Informationen über die Position zu ermitteln.

Ein System zur Steuerung eines Elektromotors wird zudem in der WO 2020/161496 A1 offenbart, wobei der Motor einen Rotor und Statorwicklungen aufweist. Das System umfasst eine Sensoranordnung mit einem ersten Sensor, der den Strom in einer Phase des Motors misst, und mit einem zweiten Sensor, der die Änderungsrate des Stroms (dl/dt) in der Phase des Motors misst. Zudem umfasst das System eine Steuerung, die so ausgelegt ist, dass sie den Elektromotor auf der Grundlage der von der Sensoranordnung empfangenen Rückmeldung antreibt.

Vor diesem Hintergrund ist es eine Aufgabe der vorliegenden Erfindung, eine kostengünstige Lösung zur Bestimmung der Rotordrehzahl eines Permanentmagnet-Synchronmotors bereitzustellen, die vorzugsweise über den gesamten Arbeitsbereich des Permanentmagnet-Synchronmotors anwendbar ist.

Zur Lösung dieser Aufgabe werden ein Verfahren zur Bestimmung einer Rotorposition eines dreiphasigen Permanentmagnet-Synchronmotors, ein Verfahren zur feldorientierten Regelung eines Permanentmagnet-Synchronmotors, eine Steuereinheit für den Betrieb eines Permanentmagnet-Synchronmotors sowie ein Lenksystem gemäß den unabhängigen Ansprüchen vorgeschlagen. Weitere vorteilhafte Ausgestaltungen der Erfindung sind in den abhängigen Ansprüchen und der Beschreibung beschrieben sowie in den Figuren dargestellt.

Die vorgeschlagene Lösung sieht ein Verfahren zur Bestimmung einer Rotorposition eines dreiphasigen Permanentmagnet-Synchronmotors vor, wobei der Permanentmagnet-Synchronmotor bezogen auf ein eine d-Achse und eine q-Achse aufweisendes d/q-Koordinatensystem als rotorfestes Bezugssystem eine d-Achsen-Induktivität (Ld) und eine von der d-Achsen-Induktivität (Ld) abweichende q-Achsen-Induktivität (Lq) aufweist, wobei jeder Phase des Permanentmagnet-Synchronmotors jeweils eine Induktivität zugeordnet ist, die sich in Abhängigkeit von der Rotorposition ändert, und wobei die Rotorposition mittels der sich ändernden Induktivitäten bestimmt wird. Erfindungsgemäß ist dabei vorgesehen, dass eine Spannung an die Phasen angelegt wird, wobei die angelegte Spannung für jede Phase jeweils einen Rippelstrom hervorruft, wobei der Rippelstrom zumindest für zwei der drei Phasen bestimmt wird und basierend auf dem für die jeweilige Phase bestimmten Rippelstrom die Induktivität der jeweiligen Phase bestimmt wird. Die Bestimmung der Induktivität der jeweiligen Phase erfolgt dabei vorteilhafterweise gemäß der bekannten Beziehung u(t) = L di(t)/dt, welche den Zusammenhang zwischen elektrischer Spannung u(t) und der Änderung des elektrischen Stroms i(t) über der Zeit t bei einer Induktivität L beschreibt. Da die vorgeschlagene Lösung ohne Sensoren zur Erfassung der Rotorposition, wie beispielsweise Hall-Sensoren, auskommt, ist sie vorteilhafterweise preiswerter zu realisieren als eine Lösung mit einer Rotorpositionserfassungssensoreinheit. Darüber hinaus erhöht diese Lösung vorteilhafterweise die Systemverfügbarkeit, da die Erfassung der Rotorposition mit dem vorgeschlagenen Verfahren über den gesamten Arbeitsbereich eines Permanentmagnet-Synchronmotors möglich ist.

Vorzugsweise ist der Permanentmagnet-Synchronmotor ein in einem Kraftfahrzeug eingesetzter Motor, insbesondere ein in einem sicherheitsrelevanten System eines Kraftfahrzeugs eingesetzter Motor, weiter insbesondere ein in einem Lenksystem eines Kraftfahrzeugs eingesetzter Motor. Insbesondere ist der Permanentmagnet-Synchronmotor ein Motor mit Schenkelpolläufer.

Weiter ist insbesondere vorgesehen, dass ausschließlich die an die Phasen angelegte Spannung für den Betrieb des Permanentmagnet-Synchronmotors bei dem erfindungsgemäßen Verfahren genutzt wird und keine zusätzliche, die angelegte Spannung überlagernde Spannung angelegt wird. Hierdurch wird die angelegte Spannung vorteilhafterweise nicht durch eine diese Spannung überlagernde weitere Spannung beeinträchtigt. Insbesondere ist vorgesehen, dass die Spannung als pulsweitenmoduliertes Signal, auch PWM-Signal genannt, angelegt wird.

Vorteilhafterweise wird der Permanentmagnet-Synchronmotor mittels eines PWM-Signals gesteuert, wobei vorteilhafterweise das PWM-Signal, insbesondere ohne Überlagerung mit einem weiteren Signal, zum Hervorrufen des Rippelstroms genutzt wird. Das PWM-Signal weist dabei insbesondere eine Frequenz von wenigstens 10 kHz (kHz: Kilohertr) auf. Insbesondere ist vorgesehen, dass der Permanentmagnet-Synchronmotor mittels einer Raumzeigermodulation unter Verwendung von Spannungsraumzeigern gesteuert wird, wobei vorteilhafterweise der anliegende Spannungsraumzeiger zum Hervorrufen des Rippelstroms genutzt wird.

Für eine Phase des Permanentmagnet-Synchronmotors wird vorteilhafterweise als Rippelstrom ein Strom bestimmt, der durch eine Rippelspannung verursacht wird, wobei sich die Rippelspannung vorteilhafterweise aus der Spannungsdifferenz aus einer Augenblicksspannung und einer durchschnittlichen Phasenspannung ergibt. Die Augenblicksspannung wird dabei durch den zugehörigen Spannungsraumzeiger bestimmt.

Die Bestimmung der durchschnittlichen Phasenspannung ist insbesondere basierend auf den Phasentastverhältnissen und/oder einem Alpha-Beta-Filter und/oder den d-q-Spannungsvektoren vorgesehen. Als durchschnittliche Phasenspannung wird dabei vorteilhafterweise die zu dem jeweiligen Oberschwingungsstrom korrespondierende Phasenspannung bestimmt.

Der Rippelstrom wird somit vorteilhafterweise für jede Phase durch die Erregungsspannung hervorgerufen, die sich als Spannungsdifferenz zwischen dem angelegten Spannungsraumzeiger und der durchschnittlichen Phasenspannung ergibt. Diese Erregungsspannung geht dabei auf die Pulsweitenmodulation basierte Raumzeigermodulation zurück, die zur Steuerung des Permanentmagnet-Synchronmotors angewendet wird und muss somit vorteilhafterweise nicht zusätzlich erzeugt werden. Das heißt, dass das Erzeugen eines zusätzlichen Spannungssignals und das Aufbringen eines zusätzlichen Spannungssignals auf eine anliegende Spannung vorteilhafterweise entfällt. Durch die hohe Frequenz am Umrichter-Ausgang für die Raumzeigermodulation von insbesondere mehr als 10 kHz, insbesondere durch eine Frequenz in einem Bereich von 12 kHz bis 24 kHz, ist auch die Erregungsspannung vorteilhafterweise hochfrequent. Insbesondere ist eine Frequenz am Umrichter-Ausgang von 16 kHz oder 20 kHz vorgesehen. Die Spannungsraumzeiger weisen dabei insbesondere diskrete Spannungsniveaus auf, die mit der Phasenspannung wechselwirken.

Die Augenblicksspannungen für die jeweiligen Phasen lassen sich dabei unter Berücksichtigung der einem jedem Wicklungsstrang U, V, W und somit jeder Phase zugeordneten Induktivität Lu, Lv, Lw vorteilhafterweise, wie in der folgenden Tabelle dargestellt, bestimmen, wobei Ubat die Spannung der Hauptspannungsquelle bezeichnet, bei einem Einsatz des Verfahrens in einem Kraftfahrzeug insbesondere die Spannung der Fahrzeugbatterie:

| | Spannungsraumzeiger Phase U (SV_ph_U) | Spannungsraumzeiger Phase V (SV_ph_V) | Spannungsraumzeiger Phase W (SV_ph_W) |
|---|---|---|---|
| Up | Ubat* (Lu/ (Lu + Lv x Lw)) | SV_ph_U - Ubat | SV_ph_U - Ubat |
| Vp | Ubat* (Lv/ (Lv + Lu x Lw)) | SV_ph_V - Ubat | SV_ph_V - Ubat |
| Wp | Ubat* (Lw/ (Lw + Lu x Lv)) | SV_ph_W - Ubat | SV_ph_W - Ubat |
| Um | -Ubat* (Lu/ (Lu + Lv x Lw)) | SV_ph_U +Ubat | SV_ph_U + Ubat |
| Vm | -Ubat* (Lv/ (Lv + Lu x Lw)) | SV_ph_V + Ubat | SV_ph_V + Ubat |
| Wm | -Ubat* (Lw/ (Lw + Lu x Lv)) | SV_ph_W + Ubat | SV_ph_W + Ubat |
| Zp oder Zm | 0V | 0 V | 0 V |
| Anmerkung: p = plus, m = minus, Z = Nullspannungsraumzeiger | | | |

Gemäß einer weiteren vorteilhaften Ausgestaltung des Verfahrens ist vorgesehen, dass für wenigstens zwei der drei Phasen ein Gradient des Rippelstroms bestimmt wird, wobei aus dem für eine Phase bestimmten Gradienten und der sich für diese Phase ergebenden Rippelspannung die Induktivität der jeweiligen Phase bestimmt wird. Insbesondere ist vorgesehen, dass für alle drei Phasen ein Gradient des Rippelstroms bestimmt wird, wobei aus dem für eine Phase bestimmten Gradienten und der sich für diese Phase ergebenden Rippelspannung die Induktivität der jeweiligen Phase bestimmt wird. Die Bestimmung des Gradienten des Rippelstroms für alle drei Phasen ist dabei insbesondere dann vorgesehen, wenn unterschiedliche Spannungsraumzeiger angelegt werden. Auf diese Weise kann für jeden ermittelten Gradienten unter Berücksichtigung der Rippelspannung die Induktivität für jede Phase bestimmt werden.

Eine vorteilhafte Ausgestaltungsvariante des Verfahrens sieht vor, dass für nur zwei der drei Phasen der Gradient des Rippelstroms bestimmt wird und aus dem für eine Phase bestimmten Gradienten und der sich für diese Phase ergebenden Rippelspannung die Induktivitäten der zwei Phasen bestimmt werden, wobei die Bestimmung der Induktivitäten für die zwei Phasen unter demselben Spannungsraumzeiger erfolgt. In diesem Fall, wo der Spannungsraumzeiger gleich ist, wird die Induktivität der dritten Phase für diesen Spannungsraumzeiger vorteilhafterweise aus den für die zwei anderen Phasen bestimmten Induktivitäten bestimmt.

Gemäß einer weiteren vorteilhaften Ausgestaltung des Verfahrens wird der Gradient des Rippelstroms mittels Phasenstrommessung bestimmt. Eine weitere vorteilhafte Ausgestaltung sieht vor, dass der Gradient des Rippelstroms mittels Zwischenkreisstrommessung bestimmt wird. Vorteilhafterweise wird für die Steuerung des Permanentmagnet-Synchronmotors eine Mikrocontrollereinheit mit einem Analog-Digital-Konverter genutzt, wobei insbesondere vorgesehen ist, für die Messung des Rippelstroms die Eingänge des Analog-Digital-Konverters des für die Steuerung des Permanentmagnet-Synchronmotors genutzten Mikrocontrollers zu verwenden. Für denselben Spannungsraumzeiger lassen sich dabei mittels Phasenstrommessung mindestens zwei Gradienten des Rippelstroms der Phasen bestimmen und mittels Zwischenkreisstrommessung ein Gradient des Rippelstroms. Wird der Rippelstromgradient über eine Zwischenkreisstrommessung oder eine Low-Side-Strommessung ermittelt, ist insbesondere vorgesehen, dass eine Messung erst eine vorbestimmte Zeit nach einem Schaltvorgang erfolgt, wobei die vorbestimmte Zeit vorzugsweise so bemessen ist, dass das Signal am Operationsverstärkerausgang eingeschwungen ist. Weiter vorteilhaft ist eine Erhöhung des Tastgrads, also des Verhältnisses von Impulsdauer zur Periodendauer, in Bezug auf den Spannungsraumzeiger vorgesehen, um den Gradienten des Rippelstroms ausreichend gut bestimmen zu können. Da bei einer Zwischenkreisstrommessung für einen bestimmten anliegenden Spannungsraumzeiger zunächst nur der Rippelstrom für eine Phase bestimmt werden kann, werden für die Bestimmung für alle drei Phasen vorteilhafterweise wenigstens zwei unterschiedliche weitere Spannungsraumzeiger genutzt. Vorteilhafterweise wird aus dem bestimmten Gradienten des Rippelstroms und der zugehörigen Spannung die Induktivität für die jeweilige Phase bestimmt.

Erfindungsgemäß wird aus der bestimmten Induktivität für eine jeweilige Phase unter Anwendung einer Clarke-Transformation ein erster Rotorwinkel bestimmt. Die Clarke-Transformation ist als solche bekannt und wird auch als α,β-Transformation bezeichnet, da sie dazu eingesetzt wird, mehrphasige Größen, wie bei einer Drehstrommaschine mit den Achsen U, V, W, in ein zweiachsiges Koordinatensystem mit einer α-Achse und einer β-Achse zu überführen. Der bestimmte erste Rotorwinkel entspricht dabei nicht dem tatsächlichen Rotorwinkel des Rotors des Permanentmagnet-Synchronmotors. Insbesondere rotiert der erste Rotorwinkel mit der zweifachen Rotorgeschwindigkeit in entgegengesetzte Richtung.

Erfindungsgemäß ist daher vorgesehen, dass auf den ersten Rotorwinkel einer Korrekturberechnung zur Bestimmung eines zweiten Rotorwinkels angewendet wird. Als zweiter Rotorwinkel wird vorzugsweise der tatsächliche Rotorwinkel mittels der Korrekturberechnung bestimmt. Der zweite Rotorwinkel rotiert gegenüber dem ersten Rotorwinkel in diesem Fall mit halber Geschwindigkeit und mit entgegengesetztem Vorzeichen.

Erfindungsgemäß wird mit der Korrekturberechnung ein Periodenverlauf mit einem Wechsel zwischen einer ersten Periode und einer zweiten Periode, die gegenüber der ersten Periode um 180° versetzt ist, berücksichtigt. Vorteilhafterweise werden die Perioden mittels eines Zählers gezählt, wobei vorteilhafterweise eine Initialisierung des Zählers beim Anlaufen des Permanentmagnet-Synchronmotors erfolgt, insbesondere unter Berücksichtigung der Einschwingzeit des Stroms. Gemäß einer vorteilhaften Weiterbildung des Verfahrens wird bei einer vorbestimmten Drehzahl des Permanentmagnet-Synchronmotors die Rotorposition unter Verwendung eines BEMF basierten Verfahrens bestimmt. Insbesondere ist also vorgesehen, dass die Rotorposition bei einer Drehzahl unterhalb der vorbestimmten Drehzahl durch die Bestimmung der Induktivitäten der Phasen ausgehend von der Ermittlung der jeweiligen Gradienten des Rippelstroms bestimmt wird und bei Erreichen der vorbestimmten Drehzahl zu dem BEMF basierten Verfahren gewechselt wird.

Weiter ist insbesondere vorgesehen, dass bei einem lastfreien stationären Zustand des Permanentmagnet-Synchronmotors und bei einem Belastungszustand des Permanentmagnet-Synchronmotors voneinander abweichende PWM-Signale angewendet werden. Hiermit wird vorteilhafterweise verhindert, dass bei einer Augenblicksspannung von 0 V (V: Volt) kein Rippelstrom erzeugt wird und insofern keine Induktivität bestimmt werden kann. Insbesondere ist vorgesehen, dass für eine Rippelstromerzeugung im stationären Zustand eine modifizierte Raumzeigermodulation angewendet wird. Diese berücksichtigt vorteilhafterweise, dass die Grundoberschwingung der Phasenspannung im stationären Zustand Null ist, was zu Fehlern bei der Strommessung führen kann. Insofern wird vorteilhafterweise eine Fehlerkorrektur vorgenommen, die den für jeden Spannungsraumzeiger bekannten Betrag des Rippelstroms berücksichtigt und weiter berücksichtigt, dass der Rippelstrom keinen Beitrag zur Grundoberschwingung des Phasenstroms liefert. Mit dieser Fehlerkorrektur wird die Abtastung für die Steuerung des Permanentmagnet-Synchronmotors vorteilhafterweise derart angepasst, dass der Rippelstrom nicht gemessen wird, wenn dieser die Grundoberschwingung überlagert.

Gemäß einer besonders vorteilhaften Ausgestaltung der Erfindung ist vorgesehen, das vorgeschlagene Verfahren zur Bestimmung einer Rotorposition eines dreiphasigen Permanentmagnet-Synchronmotors mit den vorstehend genannten Merkmalen einzeln oder in Kombination, bei einem Verfahren zur feldorientierten Regelung eines Permanentmagnet-Synchronmotors, insbesondere eines in einem Kraftfahrzeug für ein Assistenzsystem eingesetzten Permanentmagnet-Synchronmotors, einzusetzen. Insbesondere wird ein Verfahren zur feldorientierten Regelung eines Permanentmagnet-Synchronmotors, insbesondere eines in einem Kraftfahrzeug für ein Assistenzsystem eingesetzten Permanentmagnet-Synchronmotors, vorgeschlagen, wobei eine für die feldorientierte Regelung notwendige Rotorposition des Permanentmagnet-Synchronmotors bestimmt wird und die Bestimmung der Rotorposition nach einem erfindungsgemäß vorgeschlagenen Verfahren zur Bestimmung einer Rotorposition erfolgt. Gemäß einer bevorzugten Ausgestaltung erfolgt die Bestimmung der Rotorposition primär unter Nutzung wenigstens eines Rotorpositionsbestimmungssensors und - zur Erhöhung der Ausfallsicherheit - sekundär unter Anwendung des erfindungsgemäß vorgeschlagenen Verfahrens zur Bestimmung einer Rotorposition. Insbesondere ist vorgesehen, das erfindungsgemäß vorgeschlagene Verfahren zur Bestimmung einer Rotorposition anstelle eines dritten Sensors einzusetzen, insbesondere als Ersatzfunktion beim Ausfall eines Rotorpositionsbestimmungssensors.

Die zur Lösung der eingangs genannten Aufgabe ebenfalls vorgeschlagene Steuereinheit ist vorteilhafterweise zur feldorientierten Regelung eines Permanentmagnet-Synchronmotors nach einem erfindungsgemäß vorgeschlagenen Verfahren zur feldorientierten Regelung eines Permanentmagnet-Synchronmotors ausgebildet. Das weiter vorgeschlagene Lenksystem, insbesondere ein elektromechanisches Lenksystem, insbesondere eine elektromechanische Hilfskraftlenkung, umfasst vorteilhafterweise eine solche Steuerung. Das Lenksystem ist dabei ausgebildet, über eine Lenkhandhabe erteilte Lenkbefehle zu erfassen und über einen Lenksteller auf eine Zahnstange, an welcher über Spurstangen lenkbare Räder angeordnet sind, zu übertragen, wobei der Lenksteller einen Permanentmagnet-Synchronmotor umfasst.

Weitere vorteilhafte Einzelheiten, Merkmale und Ausgestaltungsdetails der Erfindung werden im Zusammenhang mit den in den Figuren (Fig.: Figur) dargestellten Ausführungsbeispielen näher erläutert. Dabei zeigt:
- Fig. 1: in einer vereinfachten schematischen Blockdarstellung ein Ausführungsbeispiel für eine erfindungsgemäß ausgebildete Steuereinheit für den Betrieb eines ebenfalls schematisch dargestellten Permanentmagnet-Synchronmotors;
- Fig. 2: in einem d/q-Koordinatensystem eine beispielhafte Differenz der d-Achsen-Induktivität und der q-Achsen-Induktivität eines Permanentmagnet-Synchronmotors, wie beispielsweise in Fig. 1 dargestellt;
- Fig. 3: eine beispielhafte Darstellung für einen Verlauf der Phaseninduktivitäten Lu, Lv, Lw eines rotierenden Rotors eines Permanentmagnet-Synchronmotors, wie beispielsweise in Fig. 1 dargestellt;
- Fig. 4a: eine Darstellung eines Ausführungsbeispiels für ein erfindungsgemäß an die Phase eines Permanentmagnet-Synchronmotors, wie beispielsweise in Fig. 1 dargestellt, angelegtes Spannungssignal;
- Fig. 4b: eine Darstellung des aus dem Spannungssignal gemäß Fig. 4a resultierenden Stroms;
- Fig. 5: eine Darstellung eines Ausführungsbeispiels für ein zu verwendendes PWM-Signal in einem Betriebszustand des Permanentmagnet-Synchronmotors, wenn die durchschnittliche Phasenspannung und die Augenblicksspannung etwa 0 V betragen, um zu verhindern, dass kein Rippelstrom auftritt;
- Fig. 6: eine Darstellung eines Ausführungsbeispiels für einen erfindungsgemäß ermittelten ersten Rotorwinkel sowie einem daraus abgeleiteten zweiten Rotorwinkel;
- Fig. 7: in einer vereinfachten schematischen Darstellung ein Ausführungsbeispiel für ein Kraftfahrzeug mit unterschiedlichen erfindungsgemäßen Anwendungen für einen Permanentmagnet-Synchronmotor mit einer erfindungsgemäß ausgebildeten Steuereinheit, wie beispielsweise in Fig. 1 dargestellt;
- Fig. 8a: in einer vereinfachten perspektivischen Darstellung ein Ausführungsbeispiel für ein erfindungsgemäß ausgebildetes Lenksystem; und
- Fig. 8b: in einer vereinfachten perspektivischen Darstellung ein weiteres Ausführungsbeispiel für ein erfindungsgemäß ausgebildetes Lenksystem.

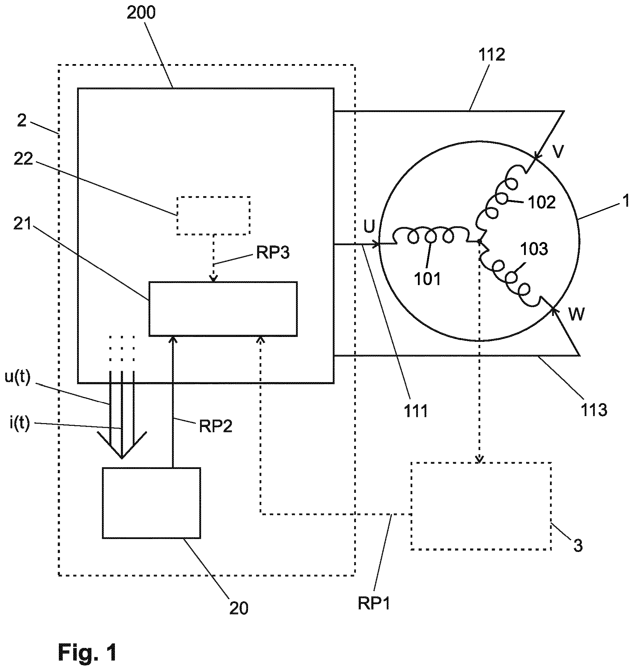

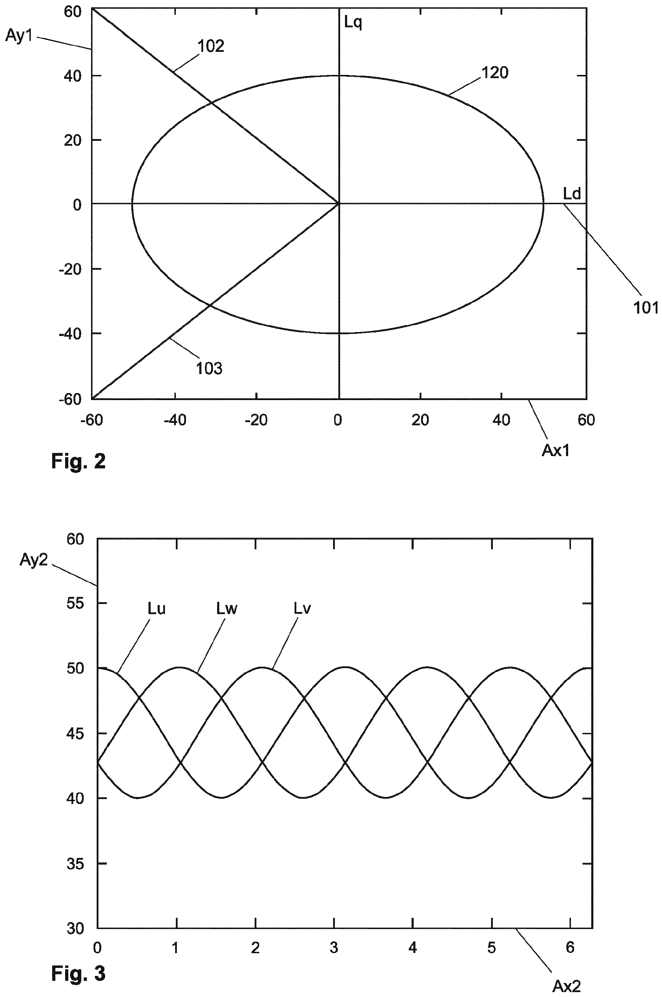

Unter Bezugnahme auf Fig. 1 wird ein vorteilhaftes Ausführungsbeispiel für die vorgeschlagene Erfindung erläutert. In Fig. 1 ist dabei schematisch ein dreiphasiger Permanentmagnet-Synchronmotor 1 mit einem Wicklungsstrang U 101, einem Wicklungsstrang V 102 und einem Wicklungsstrang W 103 dargestellt, wobei jedem Wicklungsstrang U 101, V 102, W 103 und somit jeder Phase eine Induktivität Lu, Lv, Lw zugeordnet ist. Die Phaseninduktivitäten des Permanentmagnet-Synchronmotors 1 ändern sich bei dabei als Funktion des Rotorwinkels. Bezogen auf ein eine d-Achse und eine q-Achse aufweisendes d/q-Koordinatensystem als rotorfestes Bezugssystem weist der Permanentmagnet-Synchronmotor 1 eine d-Achsen-Induktivität (Ld) und eine von der d-Achsen-Induktivität (Ld) abweichende q-Achsen-Induktivität (Lq) auf, wie in dem d/q-Koordinatensystem gemäß Fig. 2 exemplarisch dargestellt. In Fig. 2 ist dabei auf den Achsen Ax1 und Ay2 als Einheit die Induktivität in µH (µH: Mikrohenry) aufgetragen. Die Phasen U 101, V 102, W 103 sind dabei in Fig. 2 eingetragen sowie die Ld-Lq-Differenz 120, die als Ellipse modelliert ist, die mit dem Rotor des Permanentmagnet-Synchronmotors 1 rotiert, was zu der Änderung der Phaseninduktivitäten Lu, Lv, Lw führt.

Die Induktivitäten Lu, Lv, Lw lassen sich dabei als Sinusfunktionen der Rotorposition des Permanentmagnet-Synchronmotors 1 darstellen, wie beispielhaft in Fig.3 gezeigt. In Fig. 3 ist dabei auf der Achse Ax2 der Winkel im Bogenmaß (rad) und auf der Achse Ay2 die Induktivität in µH (µH: Mikrohenry) aufgetragen.

Der Permanentmagnet-Synchronmotor 1 gemäß dem in Fig. 1 dargestellten Ausführungsbeispiel wird dabei mittels der Steuereinheit 2 gesteuert. Die Steuereinheit 2 umfasst dabei einen Steuerblock 200, der an sich bekannte Funktionen für die Steuerung eines Permanentmagnet-Synchronmotors umfasst, ohne diese im Detail darzustellen, wie insbesondere einen Analog-Digital-Umsetzer, einen SVM Modulator (SVM: space vector modulation) und eine PWM-Einheit. Das heißt, dass der Permanentmagnet-Synchronmotor 1 mittels eines PWM-Signals und konkreter mit einer Raumzeigermodulation unter Verwendung von Spannungsraumzeigern gesteuert wird. Das PWM-Signal am Umsetzer-Ausgang kann insbesondere eine Frequenz von 16 kHz oder 20 kHz aufweisen.

Die Steuereinheit 2 ist dabei zur feldorientierten Regelung des Permanentmagnet-Synchronmotors 1 ausgebildet, wobei ein Block 21 für die an sich ebenfalls bekannte Funktion der feldorientierten Regelung innerhalb des Steuerblocks 200 dargestellt ist. Für die feldorientierte Regelung des Permanentmagnet-Synchronmotors 1 muss die Rotorposition des Rotors des Permanentmagnet-Synchronmotors 1 dem Block 21 als Eingangsgröße bereitgestellt werden. Bei der Steuereinheit 2 wird die Rotorposition RP2 in dem Block 20 sensorlos mit einem Verfahren zur Bestimmung einer Rotorposition eines dreiphasigen Permanentmagnet-Synchronmotors bestimmt, wobei die Rotorposition mittels der sich bei drehendem Rotor ändernden Induktivitäten bestimmt wird. Das Verfahren ist dabei zur Anwendung bei dreiphasigen Permanentmagnet-Synchronmotoren ausgebildet, wobei, wie auch in diesem Ausführungsbeispiel, der Permanentmagnet-Synchronmotor bezogen auf ein eine d-Achse und eine q-Achse aufweisendes d/q-Koordinatensystem als rotorfestes Bezugssystem eine d-Achsen-Induktivität (Ld) und eine von der d-Achsen-Induktivität (Ld) abweichende q-Achsen-Induktivität (Lq) aufweist und jeder Phase des Permanentmagnet-Synchronmotors jeweils eine Induktivität Lu, Lv, Lw zugeordnet ist, die sich in Abhängigkeit von der Rotorposition ändert. Das Verfahren zur Bestimmung der Rotorposition wird dabei von der Steuereinheit 2 auch außerhalb des Blocks 21 ausgeführt. Die Zuordnung zu dem Block 21 dient dabei im Wesentlichen der anschaulicheren Darstellung in Fig. 1, wobei in dem Block 21 in diesem Ausführungsbeispiel allerdings auch letztlich die Bestimmung der Rotorposition erfolgt. Insbesondere werden dem Block 21 der Steuereinheit 2 auch die notwendigen Größen zur Bestimmung der Induktivitäten Lu, Lv, Lw zugeführt.

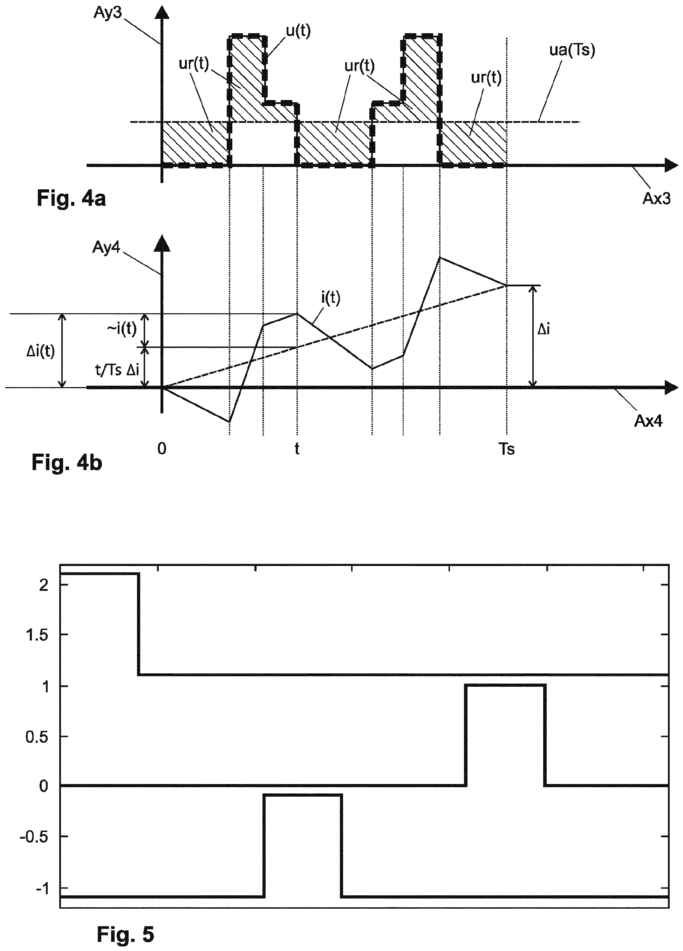

Das Verfahren zur Bestimmung der Rotorposition sieht vor, dass über die Anschlussleitungen 111, 112, 113 des Permanentmagnet-Synchronmotors eine Spannung u(t) an die Phasen angelegt wird, wobei die angelegte Spannung für jede Phase jeweils einen Rippelstrom i(t) hervorruft. In Fig. 4a ist ein Ausführungsbeispiel für eine solche vorgegebene Spannung u(t) von einem Zeitpunkt t=0 bis zu einem Zeitpunkt t =Ts dargestellt, wobei die Zeit t auf der Achse Ax3 aufgetragen ist. Die Achse Ay3 gibt die Spannung an. Aus der Differenz von Augenblicksspannung u(t) und der durchschnittlichen Phasenspannung ua(Ts) ergibt sich dabei eine Rippelspannung ur(t), die einen Rippelstrom i(t) verursacht. Der durch die Rippelspannung ur(t) hervorgerufene Rippelstrom i(t) ist in Fig. 4b dargestellt und wird für zumindest zwei der drei Phasen bestimmt. Auf der Achse Ax4 ist dabei entsprechend der Achse Ax3 die Zeit aufgetragen. Die Achse Ay4 gibt den Strom an. Insbesondere mittels Phasenstrommessung und/oder mittels Zwischenkreisstrommessung lässt sich dabei der Gradient des Rippelstroms i(t) bestimmten. Dabei lassen sich insbesondere die Eingänge eines Analog-Digital-Umsetzers einer Mikrocontrollereinheit der Steuereinheit 2 für ein Bestimmen des Gradienten des Rippelstroms nutzen. Mit dem bestimmten Gradienten des Rippelstroms wird dann über die Beziehung u(t) = L di(t)/dt die jeweilige Induktivität bestimmt.

Das Verfahren zur Bestimmung der Rotorposition sieht dabei in diesem Ausführungsbeispiel vor, dass bei einem lastfreien stationären Zustand des Permanentmagnet-Synchronmotors 1 und bei einem Belastungszustand des Permanentmagnet-Synchronmotors 1 voneinander abweichende PWM-Signale angewendet werden. In Fig. 5 ist dabei ein spezielles PWM-Signal zur Aufbringung auf die jeweiligen Anschlussleitungen 111, 112, 113 dargestellt, welches vorteilhafterweise sicherstellt, dass ein Rippelstrom i(t) im lastfreien stationären Zustand erzeugt wird, der ansonsten, bei nicht Anpassung des PWM-Signals, nicht auftreten würde, was eine Bestimmung der Phaseninduktivitäten Lu, Lv, Lw verhindern würde.

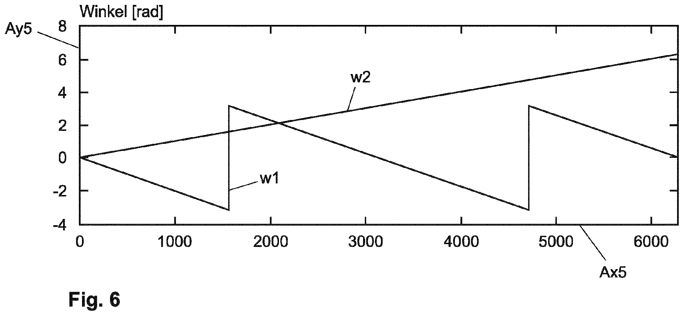

Sind aus den bestimmten Gradienten des Rippelstroms für die jeweiligen Phasen die Induktivitäten Lu, Lv, Lw für die jeweiligen Phasen in dem Block 20 der Steuereinheit 2 bestimmt worden, so erfolgt in dem Block 20 durch Anwendung einer Clarke-Transformation auf die bestimmten Induktivitäten eine Überführung in eine zweidimensionale Koordinatendarstellung, aus der ein erster Rotorwinkel w1 bestimmt wird. Ein Beispiel für einen derart bestimmten ersten Rotorwinkel w1 ist dabei in Fig. 6 dargestellt, wobei auf der Achse Ax5 die Abtastungen (Samples) und auf der Achse Ay5 der Winkel im Bogenmaß (rad) dargestellt ist. Durch Anwendung einer Korrekturberechnung wird aus dem ersten Rotorwinkel w1 ein zweiter Rotorwinkel w2 bestimmt, der dem tatsächlichen Rotorwinkel entspricht. Der Block 20 umfasst zudem einen Zähler, mittels dem die Perioden gezählt werden, um diese in Korrekturberechnung einfließen zu lassen. Dabei erfolgt beim Anlaufen des Permanentmagnet-Synchronmotors 1 eine Initialisierung des Zählers, bei der die Einschwingzeit des Stroms berücksichtigt wird. Die auf diese Weise ermittelte Rotorposition RP2 wird dann dem Block 21 für die feldorientierte Regelung des Permanentmagnet-Synchronmotors 1 als Eingangsgröße bereitgestellt.

Gemäß einer optionalen vorteilhaften Ausgestaltung ist die Rotorposition RP2 eine zu einer mit einer optionalen Rotorpositionssensoreinheit 3 ermittelten Rotorposition RP1 redundant ermittelte Rotorposition. Sowohl die mittels Sensor bestimmte Rotorposition RP1 als auch die sensorlos bestimmte Rotorposition RP2 werden dabei an den Block 21 übermittelt, sodass bei einem Ausfall der Rotorpositionssensoreinheit 3 vorteilhafterweise der Permanentmagnet-Synchronmotor 1 weiter betrieben werden kann.

Insbesondere sieht eine weitere optionale Ausgestaltung vor, dass die Steuereinheit 2 einen Block 22 zur BEMF basierten Rotorpositionsbestimmung aufweist, wobei vorgesehen ist, dass die BEMF basierte Rotorpositionsbestimmung des Blocks 22 die rippelstrombasierte Rotorpositionsbestimmung des Blocks 20 bei einer vorbestimmten Drehzahl des Rotors des Permanentmagnet-Synchronmotors 1 ablöst. Die BEMF basiert ermittelte Rotorposition RP3 wird dabei ebenfalls dem Block 21 für die Regelung des Permanentmagnet-Synchronmotors 1 zugeführt.

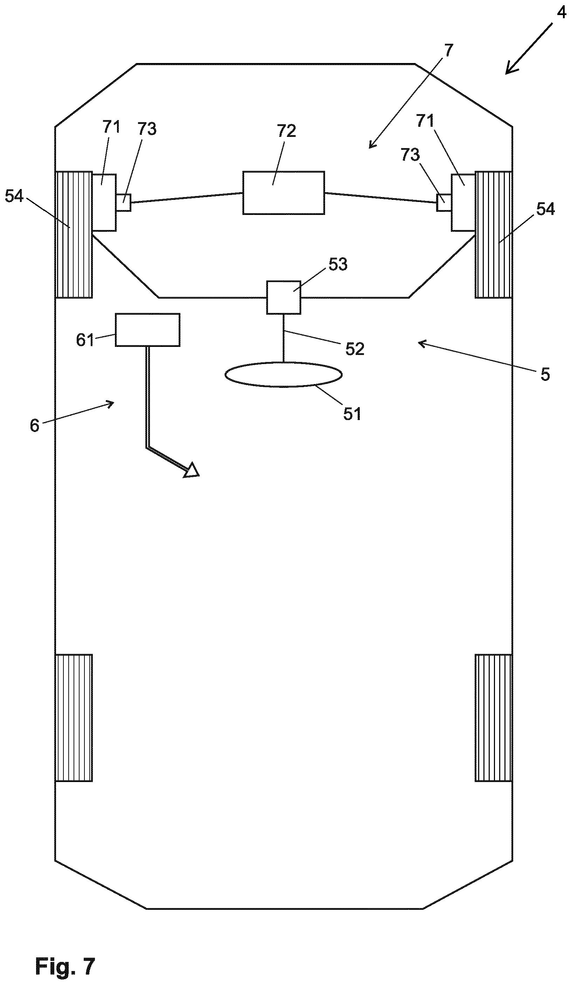

Ein Permanentmagnet-Synchronmotor 1 mit einer Steuereinheit 2, wie in Fig. 1 dargestellt, ist insbesondere für den Einsatz in einem Kraftfahrzeug 4 vorgesehen, wie beispielhaft in Fig. 7 skizziert. Insbesondere ist vorgesehen, den Permanentmagnet-Synchronmotor 1 mit der Steuereinheit 2 in einem Lenksteller 53 eines Lenksystems 5 vorzusehen. Eine weitere Anwendung ist als Motor 61 bei einem in einem Kraftfahrzeug 4 eingesetzten Klimakompressor. Eine weitere Anwendung ist als Stellmotor 73 in einem Bremssystem 7 eines Kraftfahrzeugs 4, wobei der Stellmotor die auf die jeweilige Bremse 71 wirkende Bremskraft stellt.

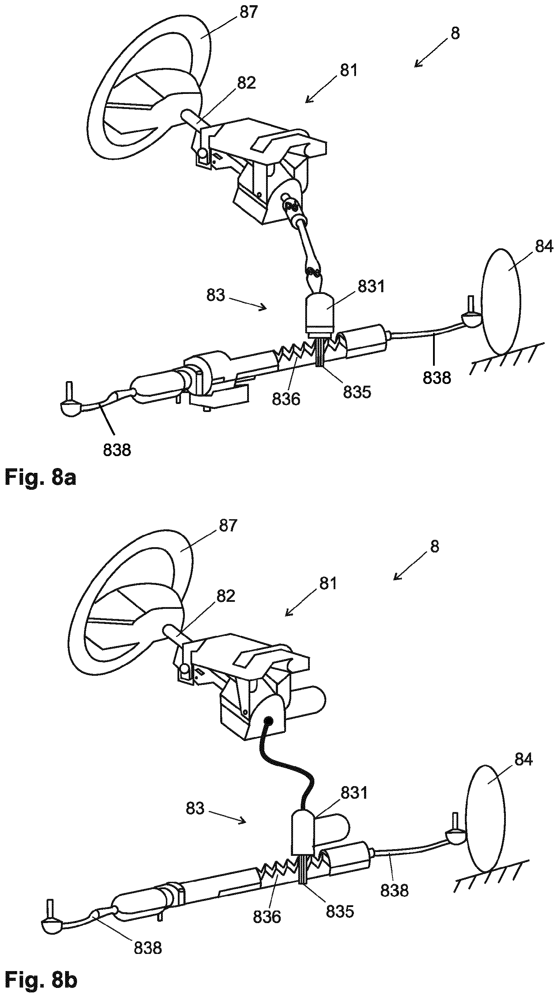

In Fig. 8a und Fig. 8b sind Ausführungsbeispiele für ein Lenksystem 8 für ein Kraftfahrzeug dargestellt. In Fig. 8a ist dabei ein elektromechanisches Lenksystem 8 und in Fig. 8b ein Steer-by-Wire-Lenksystem 8 gezeigt. Die Lenksysteme 8 umfassen jeweils eine Lenksäule 81 mit einer Lenkspindel 82 sowie ein Lenkgetriebe 83. Das Lenkgetriebe 83 umfasst ein Ritzel 835 und eine Zahnstange 836, die auch als gezahnte Koppelstange bezeichnet werden kann. Das Lenkgetriebe 83 dient zur Übersetzung einer rotatorischen Bewegung des Ritzels 835 in eine translatorische Bewegung der Zahnstange 836 entlang der Längsachse der Zahnstange 836. An dem dem Fahrer zugewandten Ende der Lenksäule 81 und somit der Lenkspindel 82 ist jeweils ein Lenkrad 87 zur Eingabe eines Fahrerlenkwunsches beziehungsweise eines Lenkbefehls befestigt, wobei der Fahrer das Lenkrad 87 in bekannter Weise zur Eingabe seines Lenkwunsches drehen kann. Die sich entlang ihrer Längsachse linear bewegende Zahnstange 836 ist jeweils zu beiden Seiten des Kraftfahrzeugs mechanisch mit einer Spurstange 838 gekoppelt. Die Spurstangen 838 sind wiederum jeweils mit den Fahrzeugrädern 84 mechanisch gekoppelt. Bei dem elektromechanischen Lenksystem 8 gemäß Fig. 8a ist die Lenksäule 81 über das Lenkgetriebe 83 mechanisch mit den gelenkten Rädern 84 des Kraftfahrzeugs gekoppelt. Bei dem Steer-by-Wire-Lenksystem 8 gemäß Fig. 8b wird der erfasste Lenkbefehl elektronisch von der Lenksäule 81 an den Lenksteller 831 des Lenkgetriebes weitergegeben. Sowohl der Lenksteller 831 gemäß Fig. 8a als auch der Lenksteller 831 gemäß Fig. 8b umfassen dabei jeweils einen Permanentmagnet-Synchronmotor 1 mit eine Steuereinheit 2, wie unter Bezugnahme auf Fig. 1 erläutert.

Die in den Figuren dargestellten und im Zusammenhang mit diesen erläuterten Ausführungsbeispiele dienen der Erläuterung der Erfindung und sind für diese nicht beschränkend.

### Bezugszeichenliste

- 1: Permanentmagnet-Synchronmotor
- 101: Wicklungsstrang U
- 102: Wicklungsstrang V
- 103: Wicklungsstrang W
- 111: Anschlussleitung für Wicklungsstrang U (101)
- 112: Anschlussleitung für Wicklungsstrang V (102)
- 113: Anschlussleitung für Wicklungsstrang W (103)
- 120: Ld-Lq-Differenz
- 2: Steuereinheit
- 20: Block der Steuereinheit (2) zur Rippelstrom basierten Bestimmung der Rotorposition (RP2)
- 21: Block der Steuereinheit (2) zur feldorientierten Regelung des Permanentmagnet-Synchronmotors (1)
- 22: optionaler Block der Steuereinheit (2) zur BEMF basierten Bestimmung der Rotorposition (RP3)
- 200: Block der Steuereinheit (2) mit bekannten Funktionalitäten
- 3: Sensoreinheit zur Bestimmung der Rotorposition (RP1) mittels Rotorpositionsbestimmungssensors
- 4: Kraftfahrzeug
- 5: Lenksystem
- 51: Lenkhandhabe
- 52: Lenkwelle
- 53: Lenksteller
- 54: lenkbares Rad
- 6: Klimakompressor
- 61: Motor des Klimakompressors (6)
- 7: Bremssystem
- 71: Bremse
- 72: zentraler Bremskraftverstärker
- 73: Stellmotor des Bremssystems (7)
- 8: Lenksystem
- 81: Lenksäule
- 82: Lenkspindel
- 83: Lenkgetriebe
- 831: Lenksteller mit Permanentmagnet-Synchronmotor (1) und Steuereinheit (2)
- 835: Ritzel des Lenkgetriebes (83)
- 836: Zahnstange
- 838: Spurstange
- 84: lenkbares Rad
- 87: Lenkhandhabe
- RP1: Rotorposition, mittels Rotorpositionsbestimmungssensor ermittelt
- RP2: Rotorposition, mittels Rippelstrom basierten Verfahrens ermittelt
- RP3: Rotorposition, mittels BEMF basierten Verfahrens ermittelt
- w1: erster Rotorwinkel
- w2: zweiter Rotorwinkel
- i(t): Rippelstrom
- u(t): Augenblicksspannung
- ua(Ts): durchschnittliche Phasenspannung
- ur(t): Rippelspannnung
- Lu: Phaseninduktivität
- Lv: Phaseninduktivität
- Lw: Phaseninduktivität
- Ld: d-Achsen-Induktivität
- Lq: q-Achsen-Induktivität
- t: Zeit
- Ts: Zeitpunkt
- Ax1: x-Achse Fig. 2
- Ay1: y-Achse Fig. 2
- Ax2: x-Achse Fig. 3
- Ay2: y-Achse Fig. 3
- Ax3: x-Achse Fig. 4a
- Ay3: y-Achse Fig. 4a
- Ax4: x-Achse Fig. 4b
- Ay4: y-Achse Fig. 4b
- Ax5: x-Achse Fig. 6
- Ay5: y-Achse Fig. 6

## Patentansprüche

1. Verfahren zur Bestimmung einer Rotorposition (RP2) eines dreiphasigen Permanentmagnet-Synchronmotors (1), wobei der Permanentmagnet-Synchronmotor (1) bezogen auf ein eine d-Achse und eine q-Achse aufweisendes d/q-Koordinatensystem als rotorfestes Bezugssystem eine d-Achsen-Induktivität (Ld) und eine von der d-Achsen-Induktivität (Ld) abweichende q-Achsen-Induktivität (Lq) aufweist, wobei jeder Phase des Permanentmagnet-Synchronmotors (1) jeweils eine Induktivität (Lu, Lv, Lw) zugeordnet ist, die sich in Abhängigkeit von der Rotorposition ändert, und wobei die Rotorposition mittels der sich ändernden Induktivitäten bestimmt wird, wobei eine Spannung (u(t)) an die Phasen angelegt wird, wobei die angelegte Spannung (u(t)) für jede Phase jeweils einen Rippelstrom (i(t)) hervorruft, wobei der Rippelstrom (i(t)) zumindest für zwei der drei Phasen bestimmt wird und basierend auf dem für die jeweilige Phase bestimmten Rippelstrom (i(t)) die Induktivität der jeweiligen Phase bestimmt wird,
**dadurch gekennzeichnet, dass** aus der bestimmten Induktivität für eine jeweilige Phase unter Anwendung einer Clarke-Transformation ein erster Rotorwinkel (w1) bestimmt wird, auf den ersten Rotorwinkel (w1) eine Korrekturberechnung zur Bestimmung eines zweiten Rotorwinkels (w2) angewendet wird, und die Korrekturberechnung einen Periodenverlauf mit einem Wechsel zwischen einer ersten Periode und einer zweiten Periode, die gegenüber der ersten Periode um 180° versetzt ist, berücksichtigt.

2. Verfahren nach Anspruch 1, **dadurch gekennzeichnet, dass** die Perioden mittels eines Zählers gezählt werden.

3. Verfahren nach Anspruch 2, **dadurch gekennzeichnet, dass** eine Initialisierung des Zählers beim Anlaufen des Permanentmagnet-Synchronmotors (1) erfolgt.

4. Verfahren nach einem der vorstehenden Ansprüche, **dadurch gekennzeichnet, dass** der Permanentmagnet-Synchronmotor (1) mittels eines PWM-Signals gesteuert wird, wobei das PWM-Signal zum Hervorrufen des Rippelstroms (i(t)) genutzt wird.

5. Verfahren nach einem der vorstehenden Ansprüche, **dadurch gekennzeichnet, dass** der Permanentmagnet-Synchronmotor (1) mittels einer Raumzeigermodulation unter Verwendung von Spannungsraumzeigern gesteuert wird.

6. Verfahren nach einem der vorstehenden Ansprüche, **dadurch gekennzeichnet, dass** für eine Phase als Rippelstrom (i(t)) ein Strom, der durch eine sich aus der Spannungsdifferenz einer Augenblicksspannung (u(t)) und einer durchschnittlichen Phasenspannung (ua(t)) ergebende Rippelspannung (ur(t)) verursacht wird, bestimmt wird, wobei die Augenblicksspannung (u(t)) durch den zugehörigen Spannungsraumzeiger bestimmt wird.

7. Verfahren nach Anspruch 6, **dadurch gekennzeichnet, dass** für wenigstens zwei der drei Phasen ein Gradient des Rippelstroms (i(t)) bestimmt wird, wobei aus dem für eine Phase bestimmten Gradienten und der sich für diese Phase ergebenden Rippelspannung (ur(t)) die Induktivität der jeweiligen Phase bestimmt wird.

8. Verfahren nach Anspruch 7, wobei für nur zwei der drei Phasen der Gradient des Rippelstroms (i(t)) bestimmt wird und aus dem für eine Phase bestimmten Gradienten und der sich für diese Phase ergebenden Rippelspannung (ur(t)) die Induktivitäten der zwei Phasen bestimmt werden, **dadurch gekennzeichnet, dass** die Bestimmung der Induktivitäten für die zwei Phasen unter demselben Spannungsraumzeiger erfolgt, wobei die Induktivität der dritten Phase für diesen Spannungsraumzeiger aus den für die zwei anderen Phasen bestimmten Induktivitäten bestimmt wird.

9. Verfahren nach Anspruch 7 oder Anspruch 8, **dadurch gekennzeichnet, dass** der Gradient des Rippelstroms (i(t)) mittels Phasenstrommessung bestimmt wird; und/oder **dass** der Gradient des Rippelstroms (i(t)) mittels Zwischenkreisstrommessung bestimmt wird.

10. Verfahren nach einem der Ansprüche 7 bis 9, **dadurch gekennzeichnet, dass** für die Steuerung des Permanentmagnet-Synchronmotors (1) eine Mikrocontrollereinheit genutzt wird, wobei Eingänge eines Analog-Digital-Umsetzers der Mikrocontrollereinheit für ein Bestimmen des Gradienten des Rippelstroms (i(t)) genutzt werden.

11. Verfahren nach einem der vorstehenden Ansprüche, **dadurch gekennzeichnet, dass** bei einer vorbestimmten Drehzahl des Permanentmagnet-Synchronmotors (1) die Rotorposition (RP3) unter Verwendung eines BEMF basierten Verfahrens bestimmt wird.

12. Verfahren nach einem der vorstehenden Ansprüche, **dadurch gekennzeichnet, dass** bei einem lastfreien stationären Zustand des Permanentmagnet-Synchronmotors (1) und bei einem Belastungszustand des Permanentmagnet-Synchronmotors (1) voneinander abweichende PWM-Signale angewendet werden.

13. Verfahren zur feldorientierten Regelung eines Permanentmagnet-Synchronmotors (1), insbesondere eines in einem Kraftfahrzeug (4) für ein Assistenzsystem eingesetzten Permanentmagnet-Synchronmotors (1), wobei eine für die feldorientierte Regelung notwendige Rotorposition (RP1, RP2, RP3) des Permanentmagnet-Synchronmotors (1) bestimmt wird, **dadurch gekennzeichnet, dass** die Bestimmung der Rotorposition nach einem Verfahren gemäß einem der Ansprüche 1 bis 12 erfolgt.

14. Steuereinheit (2) für den Betrieb eines Permanentmagnet-Synchronmotors (1), **dadurch gekennzeichnet, dass** die Steuereinheit (2) zur feldorientierten Regelung des Permanentmagnet-Synchronmotors (1) nach dem Verfahren gemäß Anspruch 13 ausgebildet ist.

15. Lenksystem (5, 8), welches ausgebildet ist, über eine Lenkhandhabe (51, 87) erteilte Lenkbefehle zu erfassen und über einen Lenksteller (53, 831) auf eine Zahnstange (836) zu übertragen, an welcher über Spurstangen (838) lenkbare Räder (54, 84) angeordnet sind, wobei der Lenksteller (53, 831) einen Permanentmagnet-Synchronmotor (1) umfasst, **dadurch gekennzeichnet, dass** der Permanentmagnet-Synchronmotor (1) eine Steuereinheit (2) nach Anspruch 14 umfasst.

## Claims

1. Method for determining a rotor position (RP2) of a three-phase permanent magnet synchronous motor (1), the permanent magnet synchronous motor (1) having, with respect to a d/q coordinate system as a rotor-fixed reference system having a d-axis and a q-axis, a d-axis inductance (Ld) and a q-axis inductance (Lq) differing from the d-axis inductance (Ld), wherein each phase of the permanent magnet synchronous motor (1) is assigned an inductance (Lu, Lv, Lw) which varies as a function of the rotor position, and wherein the rotor position is determined by means of the varying inductances, a voltage (u(t)) is applied to the phases, wherein the applied voltage (u(t)) causes a ripple current (i(t)) for each phase, wherein the ripple current (i(t)) is determined for at least two of the three phases and the inductance of the respective phase is determined based on the ripple current (i(t)) determined for the respective phase, **characterized in that** a first rotor angle (w1) is determined from the determined inductance for a respective phase using a Clarke transformation, a correction calculation for determining a second rotor angle (w2) is applied to the first rotor angle (w1), and the correction calculation takes into account a period variation with an alternation between a first period and a second period which is offset by 180° with respect to the first period.

2. Method according to claim 1, **characterized in that** the periods are counted by means of a counter.

3. Method according to claim 2, **characterized in that** initialization of said counter takes place when the permanent magnet synchronous motor (1) starts up.

4. Method according to one of the preceding claims, **characterized in that** the permanent magnet synchronous motor (1) is controlled by means of a PWM signal, the PWM signal being used to generate the ripple current (i(t)).

5. Method according to one of the preceding claims, **characterized in that** the permanent magnet synchronous motor (1) is controlled by means of a space vector modulation using voltage space vectors.

6. Method according to one of the preceding claims, **characterized in that,** for a phase, a ripple current (i(t)) is determined as a current which is caused by a ripple voltage (ur(t)) resulting from the voltage difference between an instantaneous voltage (u(t)) and an average phase voltage (ua(t)), the instantaneous voltage (u(t)) being determined by the associated voltage space vector.

7. Method according to claim 6, **characterized in that** a gradient of the ripple current (i(t)) is determined for at least two of the three phases, the inductance of the respective phase being determined from the gradient determined for a phase and the ripple voltage (ur(t)) resulting for this phase.

8. Method according to claim 7, wherein the gradient of the ripple current (i(t)) is determined for only two of the three phases and the inductances of the two phases are determined from the gradient determined for one phase and the resulting ripple voltage (ur(t)) for this phase, **characterized in that** the inductances for the two phases are determined under the same voltage space vector, wherein the inductance of the third phase for this voltage space vector is determined from the inductances determined for the two other phases.

9. Method according to claim 7 or claim 8, **characterized in that** the gradient of the ripple current (i(t)) is determined by means of phase current measurement; and/or **in that** the gradient of the ripple current (i(t)) is determined by means of intermediate circuit current measurement.

10. Method according to one of claims 7 to 9, **characterized in that** a microcontroller unit is used for controlling the permanent magnet synchronous motor (1), wherein inputs of an analog-to-digital converter of the microcontroller unit are used for determining the gradient of the ripple current (i(t)).

11. Method according to one of the preceding claims, **characterized in that** at a predetermined rotational speed of the permanent magnet synchronous motor (1), the rotor position (RP3) is determined using a BEMF-based method.

12. Method according to one of the preceding claims, **characterized in that** PWM signals that differ from one another are used in no-load steady state of the permanent magnet synchronous motor (1) and in a loaded state of the permanent magnet synchronous motor (1).

13. Method for the field-oriented control of a permanent magnet synchronous motor (1), in particular a permanent magnet synchronous motor (1) used in a motor vehicle (4) for an assistance system, wherein a rotor position (RP1, RP2, RP3) of the permanent magnet synchronous motor (1) necessary for the field-oriented control is determined,
**characterized in that** the rotor position is determined by a method according to one of claims 1 to 12.

14. Control unit (2) for the operation of a permanent magnet synchronous motor (1),
**characterized in that** the control unit (2) is designed for field-oriented control of the permanent magnet synchronous motor (1) according to the method according to claim 13.

15. Steering system (5, 8) which is designed to detect steering commands issued via a steering handle (51, 87) and to transmit them via a steering actuator (53, 831) to a rack (836) on which steerable wheels (54, 84) are arranged via tie rods (838), the steering actuator (53, 831) comprising a permanent-magnet synchronous motor (1), **characterized in that** the permanent-magnet synchronous motor (1) comprises a control unit (2) according to claim 14.

## Revendications

1. Procédé pour déterminer une position de rotor (RP2) d'un moteur synchrone à aimants permanents triphasé (1), le moteur synchrone à aimants permanents (1) présentant, par rapport à un système de coordonnées d/q présentant un axe d et un axe q, comme système de référence fixe par rapport au rotor, une inductance d'axe d (Ld) et une inductance d'axe q (Lq) différente de l'inductance d'axe d (Ld), une inductance (Lu, Lv, Lw) étant associée à chaque phase du moteur synchrone à aimants permanents (1), laquelle inductance varie en fonction de la position du rotor, et la position du rotor étant déterminée au moyen des inductances variables, où une tension (u(t)) est appliquée aux phases, la tension appliquée (u(t)) provoquant pour chaque phase respectivement un courant d'ondulation (i(t)), le courant d'ondulation (i(t)) étant déterminé pour au moins deux des trois phases et l'inductance de la phase respective étant déterminée sur la base du courant d'ondulation (i(t)) déterminé pour la phase respective, **caractérisé en ce qu'**un premier angle de rotor (w1) étant déterminé à partir de l'inductance déterminée pour une phase respective en utilisant une transformation de Clarke, un calcul de correction est appliqué au premier angle de rotor (w1) pour déterminer un deuxième angle de rotor (w2), et le calcul de correction tient compte d'un déroulement de période avec une alternance entre une première période et une deuxième période qui est décalée de 180° par rapport à la première période.

2. Procédé selon la revendication 1, **caractérisé en ce que** les périodes sont comptées au moyen d'un compteur.

3. Procédé selon la revendication 2, **caractérisé en ce qu'**une initialisation du compteur est effectuée lors du démarrage du moteur synchrone à aimants permanents (1).

4. Procédé selon l'une quelconque des revendications précédentes, **caractérisé en ce que** le moteur synchrone à aimants permanents (1) est commandé au moyen d'un signal PWM, ledit signal PWM étant utilisé pour provoquer le courant d'ondulation (i(t)).

5. Procédé selon l'une des revendications précédentes, **caractérisé en ce que** le moteur synchrone à aimants permanents (1) est commandé au moyen d'une modulation de pointeur spatial utilisant des pointeurs spatiaux de tension.

6. Procédé selon l'une des revendications précédentes, **caractérisé en ce que,** pour une phase, on détermine comme courant d'ondulation (i(t)) un courant qui est provoqué par une tension d'ondulation (ur(t)) résultant de la différence de tension entre une tension instantanée (u(t)) et une tension de phase moyenne (ua(t)), la tension instantanée (u(t)) étant déterminée par le pointeur spatial de tension associé.

7. Procédé selon la revendication 6, **caractérisé en ce qu'**un gradient du courant d'ondulation (i(t)) est déterminé pour au moins deux des trois phases, l'inductance de la phase respective étant déterminée à partir du gradient déterminé pour une phase et de la tension d'ondulation (ur(t)) qui en résulte pour cette phase.

8. Procédé selon la revendication 7, dans lequel on détermine le gradient du courant d'ondulation (i(t)) pour seulement deux des trois phases et on détermine les inductances des deux phases à partir du gradient déterminé pour une phase et de la tension d'ondulation (ur(t)) qui en résulte pour cette phase, **caractérisé en ce que** la détermination des inductances pour les deux phases s'effectue sous le même vecteur spatial de tension, l'inductance de la troisième phase étant déterminée pour ce vecteur spatial de tension à partir des inductances déterminées pour les deux autres phases.

9. Procédé selon la revendication 7 ou la revendication 8, **caractérisé en ce que** le gradient du courant d'ondulation (i(t)) est déterminé au moyen de la mesure du courant de phase ; et/ou
**en ce que** le gradient du courant d'ondulation (i(t)) est déterminé au moyen d'une mesure de courant de circuit intermédiaire.

10. Procédé selon l'une des revendications 7 à 9, **caractérisé en ce qu'**une unité de microcontrôleur est utilisée pour la commande du moteur synchrone à aimants permanents (1), des entrées d'un convertisseur analogique-numérique de l'unité de microcontrôleur étant utilisées pour une détermination du gradient du courant d'ondulation (i(t)).

11. Procédé selon l'une quelconque des revendications précédentes, **caractérisé en ce que,** à une vitesse de rotation prédéterminée du moteur synchrone à aimants permanents (1), la position du rotor (RP3) est déterminée en utilisant un procédé basé sur la BEMF.

12. Procédé selon l'une des revendications précédentes, **caractérisé en ce que** des signaux PWM différents sont appliqués lorsque le moteur synchrone à aimants permanents (1) est dans un état stationnaire sans charge et lorsque le moteur synchrone à aimants permanents (1) est dans un état de charge.

13. Procédé de régulation orientée champ d'un moteur synchrone à aimants permanents (1), en particulier d'un moteur synchrone à aimants permanents (1) utilisé dans un véhicule automobile (4) pour un système d'assistance, une position de rotor (RP1, RP2, RP3) du moteur synchrone à aimants permanents (1) nécessaire pour la régulation orientée champ étant déterminée, **caractérisé en ce que** la détermination de la position de rotor est effectuée selon un procédé selon l'une des revendications 1 à 12.

14. Unité de commande (2) pour le fonctionnement d'un moteur synchrone à aimants permanents (1), **caractérisée en ce que** l'unité de commande (2) est conçue pour la régulation orientée champ du moteur synchrone à aimants permanents (1) selon le procédé selon la revendication 13.

15. Système de direction (5, 8) qui est conçu pour détecter des ordres de direction donnés par l'intermédiaire d'une manette de direction (51, 87) et les transmettre par l'intermédiaire d'un actionneur de direction (53, 831) à une crémaillère (836) sur laquelle sont disposées des roues orientables (54, 84) par l'intermédiaire de barres d'accouplement (838), l'actionneur de direction (53, 831) comprenant un moteur synchrone à aimants permanents (1), **caractérisé en ce que** le moteur synchrone à aimants permanents (1) comprend une unité de commande (2) selon la revendication 14.
